(19) **Europäisches Patentamt**

**European Patent Office**

**Office européen des brevets**

(11) **EP 0 827 052 B1**

(12) **EUROPÄISCHE PATENTSCHRIFT**

(45) Veröffentlichungstag und Bekanntmachung des Hinweises auf die Patenterteilung:
**12.02.2003 Patentblatt 2003/07**

(51) Int Cl.$^7$: **G05B 19/05**

(21) Anmeldenummer: **97114147.8**

(22) Anmeldetag: **16.08.1997**

(54) **Verfahren und Einrichtung zur beschleunigten Ausführung eines Programmes durch eine speicherprogrammierbare Steuerung**

Method and device for accelerated execution of a program through a programmable logic controller

Méthode et dispositif pour l'éxécution accélérée d'un programme grace à un automate programmable industriel

(84) Benannte Vertragsstaaten:
**CH DE ES GB LI**

(30) Priorität: **24.08.1996 DE 19634279**

(43) Veröffentlichungstag der Anmeldung:
**04.03.1998 Patentblatt 1998/10**

(73) Patentinhaber: **ROBERT BOSCH GMBH**
**70442 Stuttgart (DE)**

(72) Erfinder:
• **Bauer, Kurt**
**73760 Ostfildern (DE)**
• **Riedmueller, Franz**
**71706 Markgroeningen (DE)**
• **Bartenschlager, Hans-Peter**
**70439 Stuttgart (DE)**
• **Jost, Thomas**
**71686 Remseck (DE)**

(74) Vertreter: **Thürer, Andreas**
**Rexroth Indramat GmbH**
**Abteilung Patentwesen RC/PAT**
**P.O.Box 1357**
**97803 Lohr am Main (DE)**

(56) Entgegenhaltungen:
EP-A- 0 608 762     EP-A- 0 640 901
DE-A- 3 743 438     DE-A- 4 142 517
DE-A- 4 226 456     US-A- 5 285 376

## Beschreibung

Stand der Technik

Die Erfindung geht aus von einer speicherprogrammierbaren Steuerung (SPS), wie sie in der Fertigungstechnik zur Steuerung einer Vielzahl von Prozessen weit verbreitet ist. Kern solcher bekannter SPS ist unabhängig von der Anwendung stets die zyklische Durchführung der folgenden Arbeitsschritte: Auslesen der an den Eingängen anliegenden Maschinenzustandssignale - Verknüpfen der Zustandssignale zu Steuersignalen - Ausgeben der Steuersignale an der Maschine zugeordnete Aktoren. Aufgrund der Aktoreinwirkung ändert die Maschine ihren Zustand. Den aktuellen Zustand erkennen an der Maschine befindliche Sensoren und melden ihn in Form von den logischen Werten 0 und 1 entsprechenden Zustandssignalen an die SPS zurück. Dort werden die zurückgemeldeten Signale gemäß dem SPS-Programm logisch zu neuen Steuersignalen verknüpft. Die Durchführung der Verknüpfungen erfolgt streng sequentiell. Eine programmgemäß nachfolgende Maschinenfunktion ist daher erst ausführbar, wenn die vorhergehende abgeschlossen ist, und der zugehörige Sensor ein den Abschlußzustand bestätigendes Quittungssignal an die SPS zurückgesendet hat. Beispielsweise erfolgt die Bewegung eines Werkzeugtisches zwischen zwei Ortspunkten durch zwei in orthogonale Richtungen zueinander wirkende Antriebe, indem zunächst der erste Antrieb angesteuert wird, dieser bei Erreichen der Endlage des auf ihn entfallenden Bewegungsanteils ein Quittungssignal an die SPS abgibt, und anschließend der zweite Antrieb angesteuert wird, um die auf diesen Antrieb entfallende Wegkomponente in der orthogonalen Richtung zu realisieren. Als unvermeidbare Folge der streng sequentiellen Durchführung der Aktorbetätigungen kommt es regelmäßig zu umständlichen und zeitintensiven Maschinenabläufen.

Aus der EP-A-0 640 901 ist eine numerisch gesteuerte Werkzeugmaschine bekannt. Zu Zwecken der Zeitersparnis kann der Werkzeugwechsel bereits gestartet werden, bevor die Maschine die genaue Werkzeugwechselposition einnimmt. Es sind in dem Teileprogramm Bedingungsanweisungen vorgesehen, die es gestatten, während der Bearbeitung des Teileprogrammsatzes weitere Aktionen einzuleiten oder auszuführen. In dem Bewegungssatz N50 ist eine Bedingungsanweisung vorgesehen, die bei einem Sollwert von X = 0,5 den Werkzeugwechsel anstößt. Somit wird der Werkzeugwechsel in Abhängigkeit einer Sollposition einer Achse gestartet.

Aus der US-A-5,285,376 ist eine FUZZY-Logik-Programmierung für eine Maschine und Prozeßsteuerung vorgesehen. Der Benutzer kann die Steuerung programmieren. Zu diesem Zweck wird dem Benutzer auf dem Programmiercomputer eine Funktionsplandarstellung angeboten, die auf FUZZY-Logik basiert. Das Programm setzt die vom Benutzer erstellten Funktionspläne in Instruktionscodes um.

Aus der DE-A-41 42 517 ist eine programmgesteuerte Wasch- und Geschirrspülmaschine mit einer Heizeinrichtung für das Waschwasser und einem die Heizeinrichtung in Abhängigkeit der Waschtemperatur schaltenden Thermostaten bekannt. Damit die vorgewählte End- bzw. Solltemperatur des Waschwassers genau eingehalten wird, wird die Geschwindigkeit des Temperaturanstiegs erfaßt und daraus eine Steuergröße für die Steuerung und damit die Abschaltung der Heizeinrichtung über den Thermostaten abgeleitet.

Es ist Aufgabe der vorliegenden Erfindung, den Maschinenablauf zu beschleunigen. Diese Aufgabe wird gelöst durch ein Verfahren und eine Einrichtung mit den Merkmalen der unabhängigen Ansprüche 1 und 7. Das erfindungsgemäße Verfahren erlaubt es, Funktionsabläufe, deren aufeinanderfolgende Ausführung jeweils ein den Abschluß des zuletzt ausgeführten Funktionsablauf bestätigendes Quittungssignal erfordert, zu überlagern. Gegenüber der sequentiellen Hintereinanderausführung führt das zu einer Zeitersparnis. Ein besonderer Vorteil des erfindungsgemäßen Verfahrens besteht darin, daß es mit Hilfe einer herkömmlichen SPS realisierbar und auf vorhandene Anlagen nachrüstbar ist. Es sind weder Eingriffe in die SPS noch in die eingesetzte Sensor- und Aktortechnik erforderlich.

Ein Ausführungsbeispiel der Erfindung wird nachfolgend unter Bezugnahme auf die Zeichnung näher erläutert.

Zeichnung

Es zeigen: Figur 1 eine speicherprogrammierbare Steuerung mit gesteuerter Maschine und Zustandsbeurteilungseinrichtung, Figur 2 ein Handhabungssystem mit möglichen Bewegungsverläufen, Figur 3 eine die Geschwindigkeit einem Satz linguistischer Variablen zuordnende Relation, Figur 4 eine Beurteilungsregeltabelle.

Beschreibung

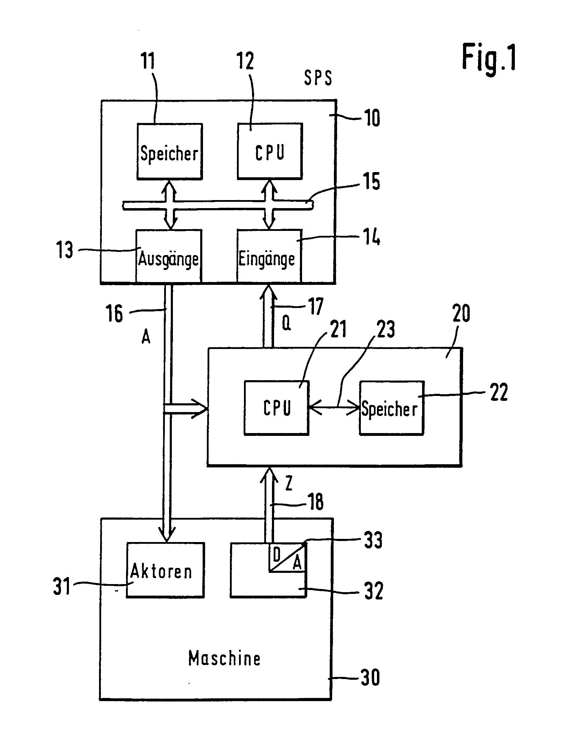

Figur 1 zeigt ein Blockschaltbild einer zur Durchführung des vorgeschlagenen Verfahrens ausgebildeten Steuerungskonfiguration, die eine übliche speicherprogrammierbare Steuerung (SPS) 10 beinhaltet. Jene baut sich intern in an sich bekannter Weise auf aus einer Eingangsschnittstelle 14, auf welche über ein Leitungssystem 17 digitale, den Zustand einer gesteuerten Maschine 30 beschreibende Signale Z geführt sind, einer Ausgangsschnittstelle 13, über welche Betätigungssignale A zur Betätigung von an der Maschine 30 angeordnete Aktoren 31 ausgegeben werden, einem Speicher 11, worin sich ein Programm zur Steuerung der Maschine 30 befindet, einer zentralen Prozessoreinheit (CPU) 12, welche die über die Eingangsschnittstelle 14 eingehenden Zustandssignale Z gemäß dem im Speicher 11 abgelegten Programm verknüpft und die Ergebnisse der Ausgangsschnittstelle 13 zuführt, sowie einem die Elemente 11 bis 14 verbindenden Datenbus zur Durchführung des Datenaustausches zwischen den Elementen 11 bis 14. Die SPS 10 ist in vielen Fällen, über eine Fortsetzung des Datenbusses 15, mit einer übergeordneten, nicht dargestellten numerischen Steuerung (NC) verbunden.

An die Ausgangsschnittstelle 13 der SPS 10 ist über ein Leitungssystem 16 eine zu steuernde Maschine 30 angeschlossen. Als Maschine soll dabei jeder sinnvoll durch eine SPS steuerbare technische Prozeß verstanden werden, Maschinen können daher neben den unter den direkten Wortsinn fallenden Einrichtungen wie Werkzeugmaschinen beispielsweise auch Roboter oder Handhabungseinrichtungen sein.

Betätigt wird die Maschine 30 durch Aktoren 31, die in oder an der Maschine 30 angeordnet sind und auf sie einwirken. Solche Aktoren 31 sind beispielsweise Ventile, Motoren oder Schalter. Die Maschine 30 besitzt weiterhin Sensoren 32, welche den Zustand der Maschine beschreibende Signale Z abgeben. Übliche Sensoren sind Schalter oder Sensoren zur Erfassung von Temperatur, Druck oder Geschwindigkeit. Sofern die Zustandssignale Z in analoger Form vorliegen, erfolgt üblicherweise im Hinblick auf die digitale Verarbeitungsstruktur der SPS 10 eine Umsetzung in digitale Signale. Hierzu kann den Sensoren 32 unmittelbar an der Maschine 30 eine Analog/Digital-Wandlereinrichtung 33 nachgeschaltet sein.

Die Zustandssignale Z der maschinenseitigen Sensoren 32 werden über ein Leitungssystem 18 einer Zustandsbeurteilungseinrichtung 20 zugeführt. Letztere umfaßt eine zentrale Prozessoreinrichtung (CPU) 21 zur Beurteilung der eingehenden Signale Z, sowie einen über eine Verbindungsleitung 23 zugeordneten Speicher 22, worin sich ein Regelwerk in Form eines Programmes befindet, gemäß dem die Zustandssignale beurteilt werden. Neben den Zustandssignalen Z sind der Zustandsbeurteilungseinrichtung 20 weiterhin die von der SPS-seitigen Ausgangsschnittstelle 13 ausgegebenen ktorbetätigungssignale A zugeführt. Ausgangsseitig ist die Zustandsbeurteilungseinrichtung 20 über ein Leitungssystem 17 mit der Eingangsschnittstelle 14 der SPS 10 verbunden, worüber sie jener Quittungssignale Q zuführt.

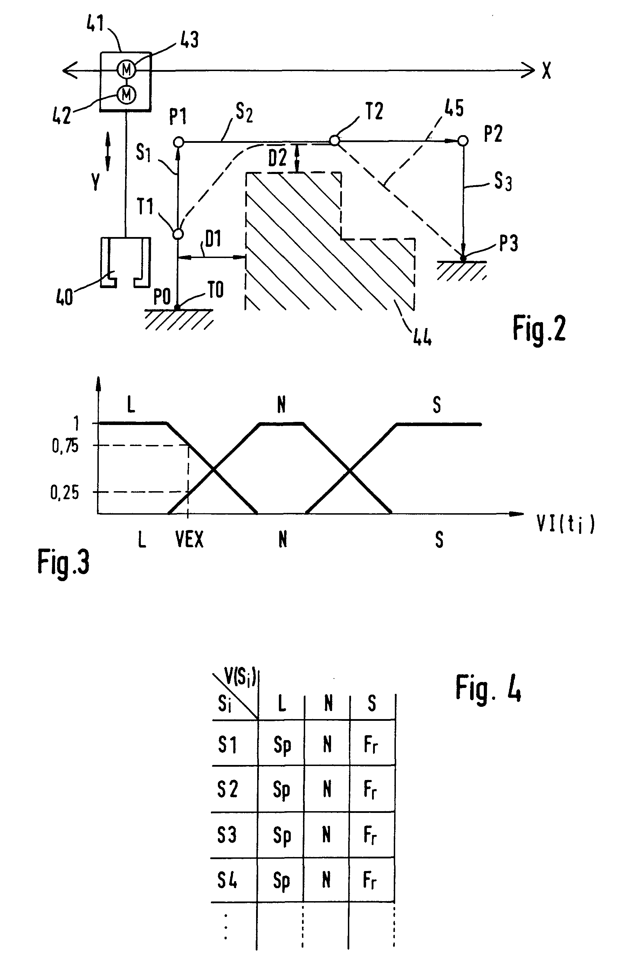

Nachfolgend wird die Funktion der in Figur 1 dargestellten Anordnung anhand der Figuren 2 bis 4 beschrieben. In Figur 2 ist hierzu eine Maschine 30 in Form eines Handhabungssystems angedeutet, welches einen Greifer 40 sowie eine Bewegungseinrichtung 41 mit zwei Aktoren 42, 43, etwa Pneumatikzylnder oder Motoren, umfaßt, mittels derer die Anordnung 40, 41 entlang zweier zueinander orthogonaler Bewegungsrichtungen X, Y beweglich ist. Die Handhabungseinrichtung 40, 41 solle vom Punkt P0 um ein Hindernis 44 herum zum Punkt P3 bewegt werden.

Bei Durchführung dieser Bewegungsaufgabe mit einer herkömmlichen SPS würde sich, wie in Figur 2 angedeutet, eine rechtwinklige Bewegungsbahn durch die Bahneckpunkte P1 und P2 ergeben. Zunächst bewegt sich dabei der Greifer 40 unter der Steuerung des für die Bewegung entlang der Y-Richtung wirksamen Aktors 42 vom Punkt P0 zum Punkt P1. Der entlang der X-Richtung wirkende Aktor 43 kann wegen des Hindernisses 44 nicht zugeschaltet sein. Das Einschalten des in X-Richtung wirkenden Aktors 43 ist erst möglich, wenn der Greifer die Position P1 erreicht hat und ein zugeordneter Lagesensor ein Quittungssignal an die SPS übergeben hat, das als Einschaltbedingung für den nachfolgenden Betrieb des Aktors 43 wirkt. Nach Einschalten des in X-Richtung wirkenden Aktors 43 kann jetzt andererseits, ebenfalls wegen des Hindernisses 44, der in Y-Richtung wirkende Aktor 42 nicht - in entgegengesetzte Richtung - betrieben werden. Dies ist erst möglich, wenn ein die Bewegung in X-Richtung erfassender Positionssensor das Erreichen der Position P2 erkannt und ein entsprechendes, als Weiterschaltbedingung wirkendes Quittungssignal Q an die SPS 10 ausgegeben hat.

Nach dem hier vorgeschlagenen Verfahren wirken die von den Sensoren 32 ausgegebenen Zustandssignale Z nicht mehr direkt als Quittungssignale oder Weiterschaltbedingungen. Letztere werden vielmehr durch die Zustandsbeurteilungseinrichtung 20 aufgrund der Aktorbetätigungssignale A und der Zustandssignale Z festgelegt, und unabhängig vom Abschluß der durch die letzte Aktorbetätigung eingeleiteten Funktion an die SPS ausgegeben. Im Speicher 22 der Zustandsbeurteilungseinrichtung 20 ist zu diesem Zweck eine Liste mit der Zeitabfolge der Ausgabe der Aktorbetätigungssignale A abgelegt. Die Liste bestimmt jeweils, bezogen auf den Einschaltzeitpunkt $T(A)$ einer aktuellen Aktorbetätigung, den Einschaltzeitpunkt für die jeweils folgende Aktorbetätigung. In Abhängigkeit von dem jeweils zuletzt von der SPS 10 ausgegebenen Aktorbetätigungssignal A und dem Vorliegen der geforderten Zustandssignale Z gibt die Zustandsbeurteilungseinrichtung 20 jeweils nach entsprechendem Fortschreiten der intern laufenden Zeit $t_{tintern}$ gemäß dem zugehörigen Eintrag in der Zeitabfolgeliste ein Quittungssignal Q an die Eingangsschnittstelle 14 der SPS 10 ab, woraufhin diese die nächste Aktorbetätigung auslöst.

Die dabei zugrundeliegende Zeitabfolgeliste wird vor Inbetriebnahme der Maschine festgelegt. In Probeläufen und/oder aufgrund des bekannten dynamischen Verhaltens der Maschine wird für jede im Rahmen der Steuerungsaufgabe durchzuführende Maschinenaktion S die für die Durchführung der Aktion benötigte Zeit $t(S)$ ermittelt. Im Falle der in Figur 2 wiedergegebenen Beispielanwendung wird etwa die Zeit $t_1$ für die Bewegung des Greifers 40 entlang der Strecke $S_2$ zwischen den Punkten P0 und P1, die Zeit $t_2$ für die Bewegung des Greifers 40 entlang der Strecke $S_2$ zwischen den Punkten P1 und P2, sowie die Zeit $t_3$ für die

Greiferbewegung entlang der Strecke $S_3$ zwischen den Punkten P2 und P3 ermittelt. Durch Bezug auf eine die Machinenaktion beschreibende Systemgröße, in Figur 2 auf die Strecken $S_1$, $S_2$, $S_3$, werden die durchschnittlichen Bewegungsgeschwindigkeiten $v_1$, $v_2$ und $v_3$ abgeleitet. Zur Festlegung des Zeitpunktes $T_1$ für das Einschalten des in X-Richtung wirkenden Motors 43 wird nun noch die Geometrie des Hindernisses 44 hinzugezogen. Dieses habe von der Strecke $S_1$ zwischen den Punkten P0 und P1 einen Abstand D1, von der Strecke $S_2$ zwischen den Punkten P1 und P2 einen Abstand D2. Mit Kenntnis der Geometrie des Hindernisses 44 kann der frühestmögliche Schaltzeitpunkt $T_1$ für die Betätigung des Motors 43 wie folgt festgelegt werden:

$$T_1 = T_0 + D1/v_2,$$

wenn $T_0$ der Schaltzeitpunkt für die Betätigung des in Y-Richtung wirkenden Aktors 42 am Punkt P0 ist. Wegen der Möglichkeit von Streuungen der Geschwindigkeit der Einzelbewegungen sollte für den tatsächlichen Einschaltzeitpunkt $T_1$ allerdings zusätzlich ein zeitlicher Sicherheitsabstand TS berücksichtigt werden, der sich nach dem zu erwartenden Streuungsbereich der zu überlagernden Einzelaktionen richtet. Der Streuungsbereich für jede Einzelaktion $S_i$ wird aus Messungen, durch Erfahrung sowie durch Beachtung der zu erwartenden Umwelteinflüsse, wie Temperaturschwankungen oder Druckveränderungen gewonnen. Unter Berücksichtigung des für die Überlagerung der nächsten Maschinenaktion angemessenen zeitlichen Sicherheitsabstandes $TS_2$ wird der Einschaltzeitpunkt $T_1$ danach zweckmäßig wie folgt festgelegt:

$$T_1 = T_0 + D1/v_2 + TS_2$$

d.h. durch Addition der Überlagerungszeit $D_1/v_2 + TS_2$ zum vorhergehenden Schaltzeitpnkt $T_0$. In analoger Weise wird anschließend der Schaltzeitpunkt $T_2$ für das erneute Einschalten des in Y-Richtung wirkenden Aktors 42 unter Berücksichtigung der Geometrie des Hindernisses 44 wie folgt bestimmt:

$$T_2 = T_1 + D2/v_3 + TS_3,$$

wobei $TS_2$ der für diese Maschinenaktion angemessene zeitliche Sicherheitsabstand ist, $D2/v_3 + TS_3$ die Überlagerungszeit.

Mit den so festgelegten Einschaltzeitpunkten $T_1$, $T_2$ ergibt sich im Beispiel der Figur 2 für den Greifer 40 die als gestrichelte Linie dargestellte Bewegungsbahn 45. Die durch die Aktoren 42 und 43 bewirkten Bewegungen sind dabei teilweise überlagert.

Entsprechend der kürzeren Gesamtbewegungsstrecke ergibt sich gegenüber der Nacheinanderausführung der einzelnen Bewegungsabschnitte über die Punkte P0, P1, P2, P3 eine insgesamt verkürzte Bewegungszeit.

Bei länger dauerndem Maschinenbetrieb mit großer Zykluswiederholungszahl können sich ändernde Betriebsbedingungen, zum Beispiel hinsichtlich Druck, Temperatur oder Verschleißerscheinungen zu einer Änderung des Maschinenverhaltens führen, wodurch es zu einer Änderung der für die Durchführung der Maschinenaktionen benötigten Funktionszeiten $t_i$ mit i = 1, 2, 3 ... kommen kann.

Als Folge davon kann es bei unveränderter Beibehaltung der vor in Betriebnahme der Maschine festgelegten Aktorbetätigungssignalausgabezeiten $T_i$ zu fehlerhaften Betriebszuständen, insbesondere zu Kollisionen mit Hindernissen kommen. Um dies zu vermeiden, beobachtet die Zustandsbeurteilungseinrichtung (20) fortlaufend die für die Durchführung der Maschinenaktionen $S_i$ benötigten Funktionszeiten $t_i(S_i)$. Jeweils nach Abschluß der Ausführung einer Maschinenaktion $S_i$ berechnet sie aus der für die Durchführung der Aktion ermittelten Funktionszeit $t_i$ den zugehörigen Ausgabezeitpunkt $T_i$ für das Aktorbetätigungssignal $A_i$ bei der wiederholten Durchführung derselben Maschinenaktion $S_i$ im nächsten SPS-Zyklus neu. Die Neuberechnung kann in einfacher Weise analog zur Ermittlung der Ausgabezeitpunkte $T_i$ erfolgen, indem jeweils die zugrundegelegten Durchschnittsgeschwindigkeiten $v_i$ entsprechend der gemessenen Funktionszeit $t_i$ und damit die jeweilige Überlagerungszeit $S_i/t_i + TS_i$ neubestimmt werden.

Eine andere vorteilhafte Möglichkeit zur Durchführung der Neuberechnung des Ausgabezeitpunkts $T_i$ für die Aktorbetätigungssignale $A_i$ sieht vor, hierfür die Prinzipien der sogenannten Fuzzy-Logik einzusetzen. Hierbei wird die für jede Maschinenfunktion $S_i$ gemessene Funktionszeit $t_i$ zunächst anhand einer auf 1 normierten Zugehörigkeitsfunktion linguistischen Werten zugeordnet. Im Beispiel der Figur 2 wird etwa die über die jeweils zugehörige Stecke $S_i$ mit der Funktionszeit $t_i$ verknüpfte Durchschnittsgeschwindigkeit $v_i$ den linguistischen Werten langsam (=L), normal (=N) und schnell (=S) zugeordnet. Figur 3 zeigt ein Beispiel für eine solche Zuordnung. Die darin beispielhaft eingetragene Geschwindigkeit VEX würde etwa mit 25 % dem linguistischen Wert N, und mit 75 % dem linguistischen Wert L zugeordnet. Die linguistischen Werte L, N, S für die Funktionszeiten $t_i$ werden nun mit Hilfe eines Regelwerkes mit den Wirkungen der Maschinenaktionen, im Beispiel Figur 2 der Bewegung entlang der Strecken $S_i$ verknüpft. Figur 4 zeigt in Form einer Zuordnung der linguistischen Werte L, N, S zu Streckenabschnitten $S_i$ ein Beispiel für ein mögliches Regelwerk, das wie folgt zu lesen ist: Wenn die Geschwindigkeit $v_1$ auf dem Streckenabschnitt $S_1$ langsam (=.L) ist, dann soll die jeweils nächste Aktorbetätigung im nächsten Zyklusdurchlauf spät (=Sp) erfolgen im Verhältnis zum normalen Durchlauf; ist die Geschwindigkeit $v_1$ auf dem Streckenab-

schnitt $S_1$ normal (=N), soll die nachfolgende Aktorbetätigung im nächsten Zyklusdurchlauf unverändert, das heißt normal (= N) erfolgen; ist die Geschwindigkeit $v_1$ für den Streckenabschnitt $S_1$ schnell (=S), soll die Ausgabe des nächsten Aktorbetätigungssignals im nächsten Zyklus früh (=$F_r$) erfolgen im Verhältnis zum normalen Durchlauf. Die mit Hilfe des Regelwerkes erhaltenen Vorschläge für den Ausgabezeitpunkt $T_i$ des nachfolgenden Aktorbetätigungssignals $A_i$ im jeweils nächsten Zyklusdurchlauf werden sodann entsprechend der Zugehörigkeit der ermittelten Geschwindigkeiten $v_i$ zu den linguistischen Werten gewichtet. Im Beispiel der Figur 3 würde sich für die darin bezeichnete Geschwindigkeit VEX für den Ausgabezeitpunkt $T_{VEX}$ im nächsten Zyklus der Vorschlag ergeben: $T_{VEX}$ = 75 % später (Sp) + 25 % normal (N). Durch geeignete Auswertung dieser Vorschlagswerte wird der Ausgabezeitpunkt $T_{VEX}$ für den nächsten Zyklusdurchlauf ermittelt. Geeignete Auswerteverfahren, welche die linguistischen Vorschlagswerte in ausführbare Zahlenwerte überführen, sind in der Fachwelt bekannt und werden deshalb hier nicht weiter erläutert.

Die Auswertung und/oder ebenso das in Figur 4 wiedergegebene Regelwerk können ihrerseits auch zunächst wieder auf Zugehörigkeitsfunktionen, ähnlich der in Figur 3 angedeuteten, führen. Zur Gewinnung eines konkreten Zeitwertes ist in diesem Falle eine sogenannte Defuzzifikation erforderlich. Entsprechende Methoden, beispielsweise die Methode Center of Gravity (COG) sind in der Fachwelt ebenfalls hinlänglich bekannt und werden hier nicht weiter erläutert; dasselbe gilt für die Auswahl der jeweils geeigneten Methode.

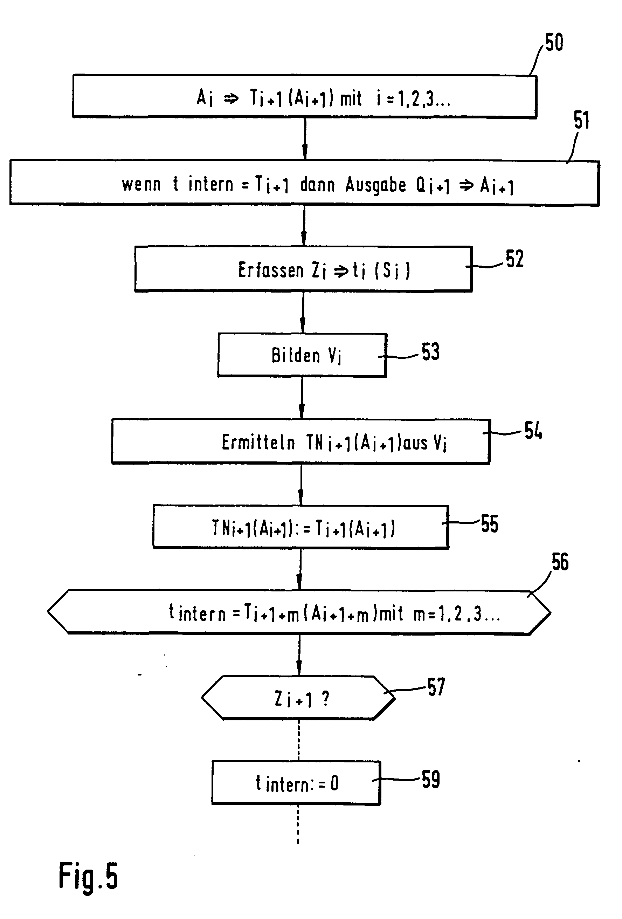

Figur 5 zeigt zur Verdeutlichung der Arbeitsweise der Zustandsbeurteilungseinrichtung 20 ein Blockdiagramm mit einem möglichen Arbeitsablauf. Er startet in Schritt 50 mit der Ausgabe eines Aktorbetätigungssignals $A_i$ durch die SPS 10 an die maschinenseitigen Aktoren 31. Das Aktorbetätigungssignal $A_i$ wird, im Beispiel Figur 1, über die hierfür vorgesehene Signalverbindung 16, auch von der CPU 21 der Zustandsbeurteilungseinrichtung 20 erfaßt. Sie ordnet ihm anhand der im Speicher 22 abgelegten Zeitabfolgetabelle einen Ausgabezeitpunkt $T_{i+1}$ für die Ausgabe des nachfolgenden Aktorbetätigungssignales $A_{i+1}$ zu. Als Bezugsbasis für die Ausgabezeitpunte $T_{i+1}$ läuft innerhalb der Zustandsbeurteilungseinrichtung 20 eine interne Zeit $t_{intern}$, die zweckmäßig jeweils nach Abschluß eines Programmzyklusdurchlaufes beziehungsweise zu Beginn des erneuten Zyklusstarts auf Null zurückgesetzt wird, Schritt 59. Entspricht $t_{intern}$ dem Ausgabezeitpunkt $T_{i+1}$ ($A_{i+1}$), übergibt die Zustandsbeurteilungseinrichtung 20 der SPS 10 ein Quittungssignal $Q_i$, welches unabhängig von ihrem tatsächlichen Zustand an der Maschine den Abschluß der durch das zugehörige Aktorbetätigungssignal $A_i$ betätigten Maschinenaktion $S_i$ bestätigt. Die SPS 10 gibt daraufhin das nächste Aktorbetätigungssignal $A_{i+1}$ aus, welches wiederum auch der Zustandsbeurteilungseinrichtung 20 zugeführt wird. Die Zustandsbeurteilungseinrichtung 20 prüft anschließend fortlaufend, ob die durch das Aktorbetätigungssignal $A_i$ eingeleitete Maschinenaktion tatsächlich abgeschlossen ist, und die zugehörige Funktionszeit $t_i$ vorliegt. Dies geschieht, wie in Schritt 52 angedeutet, aufgrund eines von den maschinenseitigen Sensoren 32 abgegebenen Zustandssignales $Z_i$, welches den tatsächlichen Abschluß der entsprechenden Maschinenaktion $S_i$ bestätigt. Gelesen auf das Beispiel in Figur 2 würde etwa der Aktor 42 ein den Abschluß einer Bewegungsaktion bestätigendes Zustandssignal abgeben, wenn die Verschiebung in Y-Richtung zur Überwindung der Strecke P0 nach P1 abgeschlossen ist. Mit Hilfe der Maschinenfunktionszeit $t_i$ bildet die Zustandsbeurteilungseinrichtung 20 die sich für die Ausführung der zugehörigen Aktion $S_i$ ergebende Maschinengeschwindigkeit $v_i$, Schritt 53. Durch Verknüpfung des ermittelten Geschwindigkeitswertes $v_i$ mit der durchgeführten Maschinenaktion $S_i$ und Auswertung mit Hilfe einer Regelbasis, wie sie in den Figuren 3 und 4 angedeutet ist, bestimmt die Zustandsbeurteilungseinrichtung 20 einen neuen Ausgabezeitpunkte $TN_{i+1}$ ($A_{i+1}$), welcher im nächsten Zyklusdurchlauf durch die Ausgabe des Aktorbetätigungssignals $A_i$ determiniert wird, Schritt 54. Den neuen Schaltzeitpunkt $TN_{i+1}$ ($A_{i+1}$) übernimmt die Zustandsbeurteilungseinrichtung 20 sodann als neuen Ausgabezeitpunkt $T_{i+1}$ in den Speicher 22, Schritt 55. Beim wiederholten Durchlauf des SPS-Zyklus bestimmt der gespeicherte neue Wert $T_{i+1}$ den Ausgabezeitpunkt für das nachfolgende Aktorbetätigungssignal $A_{i+1}$. Ein Aktorbetätigungssignal $A_i$ kann dabei auch mehrere nachfolgende Aktorbetätigungssignale $A_{i+n}$ mit n = 1, 2, 3,... determinieren. Die Zustandsbeurteilungseinrichtung 20 prüft in diesem Fall nach Neubestimmung des Ausgabezeitpunktes $T_{i+1}$, ob die intern mitlaufende Zeit $t_{intern}$ dem nächsten durch das Aktorbetätigungssignal $A_i$ bestimmten Ausgabezeitpunkt $T_{i+2}$ entspricht, Schritt 56. Trifft dies zu, wiederholt sie die Schritte 51 fortfolgend. Steht die Ausgabe des nächsten Aktorbetätigungssignales $A_{i+1}$ noch nicht an, prüft die Zustandsbeurteilungseinrichtung 20, ob ein den Abschluß einer Maschinenaktion bestätigendes Zustandssignal $Z_i$ vorliegt. Liegt ein solches Signal vor, führt sie damit die Schritte 52 bis 55 durch.

Obwohl das Konzept der Zustandsbeurteilungseinrichtung 20 nur in Verbindung mit der Durchführung einer räumlichen Bewegung beschrieben wurde, ist es nicht auf solche Anwendungen eingeschränkt. Nach denselben Prinzipien können beispielsweise auch Massenströme in Rohrleitungen oder chemische Reaktionen überlagert werden. Ohne über das vorgeschlagene Konzept hinauszugehen, können dabei die verwendete SPS 10 und die eingesetzte Maschine mit den zugehörigen Aktoren 31, 32 in weitem Rahmen frei, und insbesondere abweichend von der in Figur 1 wiedergegebenen Konfiguration ausgebildet werden. Dasselbe gilt auch für die Aktualisierung der Ausgabezeitpunkte beispielsweise hinsichtlich der zugrundegelegten Regelbasis, hinsichtlich der Art und Zuordnung zu linguistischen Werten sowie der Defuzzifizierung. Als lediglich beispielhaft soll auch der für die Arbeitsweise der Zustandsbeurteilungseinrichtung 20 vorgeschlagene Programmablauf verstanden werden. Er wird in der Regel an die konkrete Aufgabe angepaßt sein und kann von dem in Figur 5 wiedergegebenen abweichen.

**Patentansprüche**

1. Verfahren zur beschleunigten Ausführung eines Programmes durch eine speicherprogrammierbare Steuerung (SPS) an einer Maschine, welche von der SPS betätigte Aktoren zum Bewirken von Maschinenaktionen sowie Sensoren zur Abgabe von Maschinenzustandssignalen aufweist, wobei die jeweils nächste Aktorbetätigung unabhängig davon ausgelöst wird, ob die durch die vorhergehende Aktorbetätigung bewirkte Maschinenaktion abgeschlossen ist, **dadurch gekennzeichnet, daß** der Ausgabezeitpunkt $(T_{i+1})$ eines nachfolgenden Aktorbetätigungssignales $(A_{i+1})$ auf den Ausgabezeitpunkt $(T_i)$ eines vorhergehenden Aktorbetätigungssignales $(A_i)$ bezogen wird.

2. Verfahren nach Anspruch 1, **dadurch gekennzeichnet, daß** sich der Ausgabezeitpunkt $(T_{i+1})$ eines folgenden Aktorbetätigungssignales $(A_{i+1})$ durch Addition einer Überlagerungszeit zum Ausgabezeitpunkt $(T_i)$ eines vorhergehenden Aktorbetätigungssignales $(A_i)$ ergibt.

3. Verfahren nach Anspruch 1, **dadurch gekennzeichnet, daß** der Zeitpunkt $(T_i)$ für die Ausgabe eines Aktorbetätigungsignales $(A_i)$ in jedem SPS-Zyklus für die nächste Wiederholung des Zyklus neu bestimmt wird.

4. Verfahren nach Anspruch 3, **dadurch gekennzeichnet, daß** zur Neubestimmung eines Aktorbetätigungssignales $(A_i)$ für die nächste Zykluswiederholung die Funktionszeit $(t_i)$ zur Durchführung der durch die Aktorbetätigung $(A_i)$ ausgelösten Maschinenaktion $(S_i)$ ermittelt wird.

5. Verfahren nach Anspruch 4, **dadurch gekennzeichnet, daß** für die Neubestimmung eines Aktorbetätigungssignales $(A_i)$ eine der erfaßten Funktionszeit $(t_i)$ entsprechende Größe (L, N, S) mit einer die Maschinenaktion beschreibenden Systemgröße $(S_i)$ nach durch eine Wissensbasis vorgegebenen Regeln verknüpft wird.

6. Verfahren nach Anspruch 1, **dadurch gekennzeichnet, daß** der zeitliche Zusammenhang der Aktorbetätigungssignale $(A_i)$ durch eine Zeitabfolgeliste bestimmt wird, worin die Zeitabfolge der Aktorbetätigungssignale $(A_i)$ eingespeichert ist.

7. Vorrichtung zur beschleunigten Ausführung eines Programms durch eine speicherprogrammierbare Steuerung (SPS) an einer Maschine, welche von der SPS betätigte Aktoren zum Bewirken von Maschinenaktionen sowie Sensoren zur Abgabe von Maschinenzustandssignalen aufweist, wobei die jeweils nächste Aktorbetätigung unabhängig davon ausgelöst ist, ob die durch vorhergehende Aktorbetätigung bewirkte Maschinenaktion abgeschlossen ist, **dadurch gekennzeichnet, dass** der Ausgabezeitpunkt $(T_i+1)$ eines nachfolgenden Aktorbetätigungssignales $(A_i+1)$ auf den Ausgabezeitpunkt $(T_i)$ eines vorhergehenden Aktorbetätigungssignales $(A_i)$ bezogen ist.

**Claims**

1. Method for accelerated execution of a program by means of a programmable logic control (PLC) on a machine being equipped with actuators activated by the PLC and effecting machine actions as well as with sensors for the emission of machine status signals, with each subsequent actuator activation being triggered independently of whether the machine action effected by the previous actuator activation has been completed, **characterized in that** the time of emission $(T_{i+1})$ of a subsequent actuator activation signal $(A_{i+1})$ is related to the time of emission $(T_i)$ of a previous actuator activation signal $(A_i)$.

2. Method according to claim 1, **characterized in that** the time of emission $(T_{i+1})$ of a subsequent actuator activation signal $(A_{i+1})$ results from adding a superposition time to the time of emission $(T_i)$ of a previous actuator activation signal $(A_i)$.

3. Method according to claim 1, **characterized in that** the time $(T_i)$ of emission of an actuator activation signal $(A_i)$ is, in each PLC cycle, redefined for the following repetition of the cycle.

4. Method according to claim 3, **characterized in that**, in order to redefine an actuator activation signal $(A_i)$ for the following cycle repetition, the processing time $(t_i)$ required for carrying out the machine action $(S_i)$ triggered by the actuator activation $(A_i)$ is determined.

5. Method according to claim 4, **characterized in that**, in order to redefine an actuator activation signal $(A_i)$, a quantity (L, N, S) corresponding to the determined processing time $(t_i)$ is linked with a system quantity $(S_i)$ describing the machine action, on the basis of rules defined by particular knowledge.

**6.** Method according to claim 1, **characterized in that** the chronological relation of the actuator activation signals ($A_i$) is defined by a timing list used to store the chronological sequence of the actuator activation signals ($A_i$).

**7.** Device for accelerated execution of a program by means of a programmable logic control (PLC) on a machine being equipped with actuators activated by the PLC and effecting machine actions as well as with sensors for the emission of machine status signals, with each subsequent actuator activation being triggered independently of whether the machine action effected by the previous actuator activation has been completed, **characterized in that** the time of emission ($T_{i+1}$) of a subsequent actuator activation signal ($A_{i+1}$) is related to the time of emission ($T_i$) of a previous actuator activation signal ($A_i$).

**Revendications**

**1.** Procédé pour l'exécution accélérée d'un programme au moyen d'un automate programmable industriel (API) sur une machine dotée de capteurs pour l'émission de signaux d'états de la machine et, pour l'exécution des actions mécaniques, d'actionneurs activés par l'API dont le déclenchement consécutif est indépendant du fait que l'action mécanique engendrée par l'actionneur précédent soit ou non terminée,
**caractérisé par le fait que** le moment de sortie ($T_{i+1}$) de chaque signal consécutif d'activation d'actionneur ($A_{i+1}$) se réfère au moment de la sortie ($T_i$) du signal précédent d'activation d'actionneur($A_i$).

**2.** Procédé conformément à la revendication 1, **caractérisé par le fait que** le moment de sortie ($T_{i+1}$) de chaque signal consécutif d'activation d'actionneur ($A_{i+1}$) est le résultat de l'addition d'un temps de superposition au moment de la sortie ($T_i$)du signal précédent d'activation d' actionneur ($A_i$).

**3.** Procédé conformément à la revendication 1, **caractérisé par le fait que** le moment ($T_i$)pour la sortie du signal d'activation d'actionneur ($A_i$)est redéterminé dans chaque cycle API pour la répétition suivante du cycle.

**4.** Procédé conformément à la revendication 3, **caractérisé par le fait que** pour la redétermination du signal d'activation d'actionneur ($A_i$)pour la répétition suivant du cycle, le temps de fonctionnement ($t_i$)est déterminé pour l'exécution de l'action mécanique déclenchée par l'activation de l'actionneur ($A_i$.

**5.** Procédé conformément à la revendication 3, **caractérisé par le fait que** pour la redétermination du signal d'activation d'actionneur ($A_i$), une grandeur (L, N, S) correspondant au temps de fonctionnement saisi ($t_i$)est, en se basant sur les connaissances de règles prédéfinies, mise en corrélation avec une grandeur du système ($S_i$).

**6.** Procédé conformément à la revendication 1, **caractérisé par le fait que** le rapport dans le temps des signaux d'activation d'actionneur($A_i$)est déterminé sur la base d'une liste de séquences chronologiques où l'ordre séquentiel des signaux d'activation d'actionneur ($A_i$)est mémorisé.

**7.** Dispositif pour l'exécution accélérée d'un programme au moyen d'un automate programmable industriel (API) sur une machine dotée de capteurs pour l'émission de signaux d'états de la machine et dotée, pour l'exécution des actions mécaniques, d'actionneurs activés par l'API dont le déclenchement consécutif est indépendant du fait que l'action mécanique engendrée par l'actionneur précédent soit ou non terminée, **caractérisé par le fait que** le moment de sortie ($T_{i+1}$) de chaque signal consécutif d'activation d'actionneur ($A_{i+1}$) se réfère au moment de la sortie ($T_i$)du signal précédent d'activation d' actionneur($A_i$).

Fig.1

Fig.2

Fig.3

Fig. 4

| V(Sᵢ) | L | N | S |
|---|---|---|---|
| S1 | Sp | N | Fr |
| S2 | Sp | N | Fr |
| S3 | Sp | N | Fr |
| S4 | Sp | N | Fr |
| ⋮ | ⋮ | ⋮ | ⋮ |

$A_i \Rightarrow T_{i+1}(A_{i+1})$ mit $i = 1,2,3...$ — 50

wenn t intern $= T_{i+1}$ dann Ausgabe $Q_{i+1} \Rightarrow A_{i+1}$ — 51

Erfassen $Z_i \Rightarrow t_i(S_i)$ — 52

Bilden $V_i$ — 53

Ermitteln $TN_{i+1}(A_{i+1})$ aus $V_i$ — 54

$TN_{i+1}(A_{i+1}) := T_{i+1}(A_{i+1})$ — 55

t intern $= T_{i+1+m}(A_{i+1+m})$ mit $m = 1,2,3...$ — 56

$Z_{i+1}$ ? — 57

t intern $:= 0$ — 59

Fig.5